# EUROPEAN PATENT APPLICATION

(11) **EP 1 168 275 A1**
(43) Date of publication of application: **02.01.2002**
(21) Application number: 00113855.1
(22) Date of filing: 30.06.2000
(51) Int. Cl.: G08G 1/127, G06F 17/60, H04M 3/493, G07B 13/00

(54) **Passenger transportation system and method**

(71) Applicant: Nokia Networks Oy, 02150 Espoo (FI)
(72) Inventor: Cappel, Joachim, 47918 Tönisvorst (DE)
(74) Representative: Cohausz & Florack

(57) **Abstract**

The invention relates to a passenger transportation system and method for transporting a passenger from a starting point (P1) along a passenger route to a destination (P2) by at least one transporter using a transporter route (B'-B'') which overlaps at least partially with the passenger route. The system comprises a transport service provider TSP unit (1) comprising transporter route information and served network area information and being enabled for communicating passenger position data and transporter identification data with the passenger and transporter position data as well as pick-up and release notification data with the transporter; such that the passenger route is composed of at least one section of a selected overlapping transporter route.
Using said system and method is more convenient to the passenger.

## Description

The invention relates to a passenger transportation system and method for transporting the passenger in a transporter.

For reasons of a convenience today most people use vehicles or cars of their own to travel from their home place to their working place and back; in these cases most of the cars are used by only one single person although the car itself is capable of carrying three or more passengers additionally. Traffic jams during the morning and evening rush hours of normal work days are the consequence. These traffic jams mean a serious cause for a waste of time and money and environmental pollution.

A known possibility to avoid such jams is the establishment and use of car sharing systems. The basic idea of such car sharing systems is to concentrate the number of passengers NP into a number of cars NC such that the ratio NP/NC becomes two or even bigger with the result that traffic jams become less likely. Common car sharing systems provide a connection between a passenger who needs transportation and available cars (transporters) offering transportation for passengers. In known car sharing systems transporters and passengers are brought together by a human operator. Said operator may use computer databases storing information about the passenger's transportation requests and the transporters transportation offers.

However, communication between passengers and appropriate transporters by a human operator often takes quite a long time and is thus inconvenient to the passengers. Moreover, it is ineffective, in particular, when the number of possibilities to bring transporters and passengers together is quite large. Further, regularly paying to the human operator is quite expensive.

Starting from that prior art it is the object of the invention to improve a known passenger transportation system and method in the way that the usage thereof is more convenient to the passenger.

According to claim 1 the object is solved by a passenger transportation system for transporting a passenger from the starting point P1 along a passenger route to a destination P2 by at least one transporter using a transporter route B'-B" which overlaps at least partially with the passenger route, the system comprising:
a transport service provider TSP unit comprising transporter route information and served network area information and being enabled for communicating passenger position data and transporter identification data with the passenger and transporter position data as well as pick-up and release notification data with the transporter,
such that the passenger route is composed of at least one section of a selected overlapping transporter route.

According to the present invention the human operator in the known passenger transportation system is replaced by the transport service provider TSP. That solution has the advantage that calls from the passengers or the transporters can be received in parallel with the result that waiting times for the passengers and the transporters for being served by the TSP are reduced to a minimum.

Moreover, the TSP is capable of selecting the best suitable transporter with regard to a specific passenger's transportation request very quickly and effectively even if the number of available transporters is quite large. That selection step can be done immediately after receipt of a passenger's transportation request.

Further, the TSP is capable of immediately informing the passenger and the selected transporter via a telecommunication system with the result that the connection of the passenger and the transporter is carried out much quicker and more flexible than in the prior art. According to the present invention a passenger's transportation request can be answered immediately with the result that the passenger may be picked up only a very short time after he has communicated his transportation request to the TSP.

The system manages that transporters are used by two or even more persons simultaneously so that the car traffic is reduced considerably.

Moreover, because the passenger transportation system according to the invention requires no human operator, no income has to be paid to that human operator and thus the price for using the service provided by the passenger transportation system and method can be low. Further, the passengers save money because they do not need to use their own car when using the system according to the invention.

According to a first embodiment the passenger transportation system and in particular the TSP comprises a first network terminal at a passenger's location for exchanging the passenger position data and said transporter identification with said TSP. Moreover, it comprises at least a second network terminal at the location of the at least one transporter for exchanging said transporter position data and said pick-up/release notification data with said TSP. Said network terminals are terminals of the telecommunication system. Preferably, they are mobile equipment of a mobile telecommunication system and are capable to send and receive data between the passengers and the TSP or between the transporters or the drivers of said transporters and the TSP.

Advantageously, the first and/or second network terminal provides GPS or GSM/UMTS location positioning capabilities for tracking the location of the passenger and/or the at least one transporter for generating said passenger and/or transporter position data.

Preferably, each of the first and/or second network terminal is capable of communicating the location position data of the passenger and/or of the transporter to the TSP.

Preferably, the TSP is connected with a transporter database containing said individual transporter route information of all transporters and/or the usual travel times or the current position.

The system is further advantageously connected with a node and connections data base NCD which holds all nodes and all connections of the served route network area.

It is further advantageous that the TSP is further connected to a passenger database containing information about the passenger identification, the preferred starting time, the desired destination, the usual travel times and/or the passenger's current position.

The TSP preferably comprises a register interface enabling the passengers or the driver's of the transporters to register before using the passenger transportation system.

The TSP advantageously comprises a mailing interface enabling communication between the TSP and any registered user that means passenger or driver/transporter of the system.

The system advantageously comprises an accounter for calculating the costs of the passenger for being transported and the price the passenger has to pay to the driver of the transporter and to the provider.

The object is further solved by a network terminal unit of a mobil communication system MTS being capable for use in a system according to claim 1.

The above identified object is further solved by the method according to claim 12. The advantages of said passenger transportation method correspond to the advantages of the passenger transportation system as described above as far as the system comprises features which are necessary for carrying out the described method.

According to the first embodiment of the passenger transportation method the passenger is successively transported along at least two sections of the passenger route by repeating the method according to claim 12 until the passenger has reached his desired destination P2. In that case the passenger is transported to a place which is not the desired final destination of the passenger. Preferably the passenger is then picked up at the place of current release by a second transporter in order to be transported closer to the desired destination.

Preferably, each of that transporter routes represents a combination of connections of the served route in a network area. The node defines a particular point or area of a predetermined transporter route where a pick-up or a release of a passenger is possible or where the route of the first transporter crosses the route of a second transporter.

It is advantageous that the starting point P1 and the destination P2 of the passenger route are also nodes of said served network area because at this nodes a pick-up or release of the passenger from the transporter is easily possible.

It is convenient to the passenger and the driver of the selected transporter that the TSP organizes the pick-up of the passenger by the selected transporter by proposing an appropriate meeting point and an appropriate dating time to the passenger and the driver.

It is advantageous if the proposed meeting point is a node of the served network area because in that case the transporter does not to need to go a long way round its original predetermined transporter route.

In a preferred embodiment the passenger can be picked-up by the transporter at the passenger's current position. In that case the TSP does not need to work to another meeting point. In a very preferred embodiment the current position of the passenger corresponds to place B' where the transporter route starts. In that case the transporter does not need to go a long way around its route.

Preferably the driver of the transporter communicates the start notification to the TSP indicating that he has actually started this route at a time. The start notification indicates to the TSP that the respective transporter shall be considered when searching the best suitable transporter for picking-up a passenger having issued a specific transportation request. When only these transporters are considered which have issued that start notification to the TSP the workload for the TSP is reduced when selecting the best suitable transporter.

It is advantageous if the selection of the best suitable transporter comprises the steps of tracking the current position of each transporter who has communicated said start notification to the TSP and of evaluating said current tracking information in the view of the specific transportation request of a passenger in order to select the best suitable transporter. Due to the tracking of the current position of each driver the apropriate meeting point and the appropriate dating time can be calculated more precisly. Further, drivers who have already passed the start place requested by a passenger need not to be considered for the selection of the best suitable transporter any more.

It is advantageous that the method further comprises the step of tracking a passenger when he is transported in the transporter because the tracking allows a precise determination of the status of the passenger, that means a determination as to whether the passenger is waiting for a pick-up, as to whether he is still travelling or as to whether he has arrived at the destination or at any other place.

Preferably, the tracking of the passenger is done in order to track the distance along which the passenger has been transported in the transporter. The distance, e.g. the number of kilometers, is used as a basis for calculating the price the passenger has to pay to the driver of the transporter and to the TSP.

The application comprises the following accompanying figures, wherein
- Fig. 1: shows a block diagram of the system's components;
- Fig. 2: shows an illustration of a route matching; and
- Fig. 3: shows a block diagram illustrating the exchange of messages between the passenger, the driver and the TSP.

A preferred embodiment of the present invention will now be described under consideration of the above identified figures.

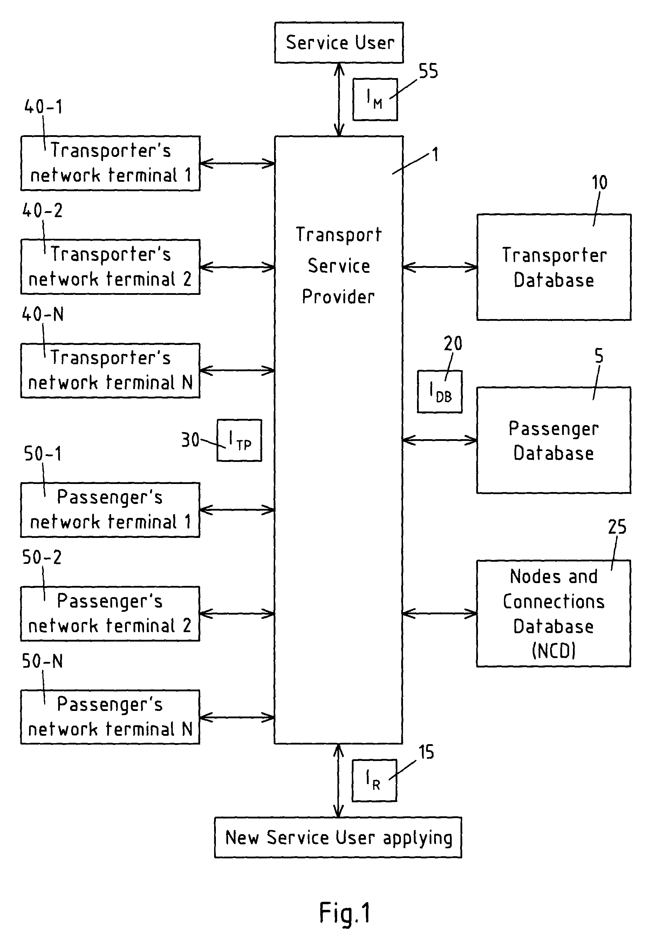

Fig. 1 shows a block diagram illustrating the passenger transportation system according to the present invention. The core of the system is a transport service provider TSP 1 which is the entity that manages passenger transport requests and available transporters to meet at the right node at the right time.

Before using the system and the service provided by the system the first time service users, i.e. passengers or drivers of the transporters may register with the TSP 1. Registration takes care that all relevant route and personal information of the transporters and passengers is provided to the TSP 1. More specifically, registration of the passenger is done by storing relevant parameters like a passenger identification ID, a preferred starting point P1 and a destination P2 and usual travel times for all passengers in a passenger database 5. Similarly, for registration all transporters together with their static data like their preferred complete route including start place B', destination B" and all intermediate nodes, their usual travel times, their vehicle and their vehicle identification are stored in a transporter database 10.

For enabling registration the TSP comprises a register interface I_{R} 15. Said register interface I_{R} 15 preferably enables registration via a world wide web WWW based user interface. Registration of both drivers/transporters and passengers ensures a high degree of safety thinking and reliability to avoid accidents and misuse of the system. That is achieved since the identity of both drivers and passengers is given to the TSP 1 by registration. Black lists and complaints databases should be used to keep unwanted people out the whole service system.

The TSP 1 may make sure that drivers of transporters are proved to have sufficient driving experience and a safety attitude. Additionally, the TSP 1 may provide sufficient insurance to both, passengers and drivers.

According to Fig. 1 the TSP 1 is via a database interface I_{DB} 20 not only connected to the transporter database 10 and to the passenger database 5 but also to a nodes and connections database NCD 25. Latter database holds all nodes and all connections of a served route network area. Nodes in the served route network area describe places in said route network where transporters can preferably stop and take passengers on board or leave passengers off board. These nodes have to be planned carefully considering parking occasions for the drivers and nearness to most of the passenger's desired starting points and destinations. Moreover, the locations of said nodes are preferably made public to all service users by a network operator. The route of the transporter can then be seen as a set of related nodes and connections wherein a connection represents a piece of route that connects two nodes. The NCD 25 holds all nodes and all connections of the served route network area.

According to Fig. 1 the TSP further comprises a transport provider interface I_{TP} 30 enabling communication between at least one driver's or transporter's network terminal 40-1, ... 40-N and the TSP or between at least one passenger's network terminal 50-1, ..., 50-M and the TSP. Preferably such a network terminal NT is a mobile equipment of a mobile telecommunications system MTS wherein the network terminal NT is capable of sending and receiving data between passengers or transporters and the TSP.

The TSP 1 further comprises a mailing interface I_{M} 55 for sending bills and other mail to the service users out e.g. of service time. Bills and other mail may also be send to the service users via said registration interface I_{R} 15.

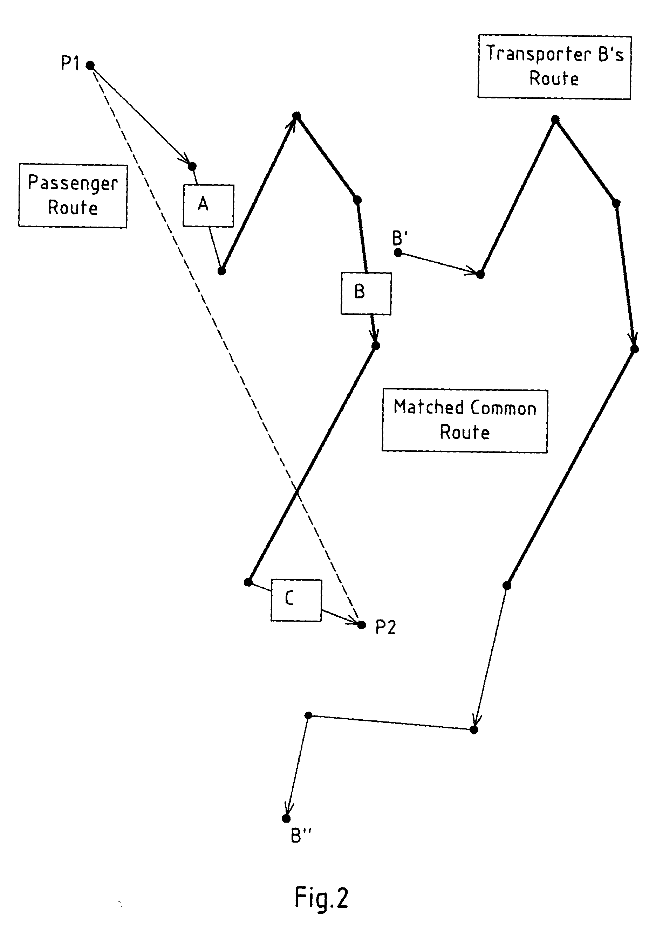

The system as described above under consideration of Fig. 1 serves for transporting a passenger in a transporter. More specifically, when a passenger needs transportation from a starting point P1 to a destination P2 as shown in Fig. 2 the TSP 1 has to map a transportation route for the passenger. Preferably, the starting point P1 and the destination P2 desired by the passenger are nodes of a route offered by one transporter.

If there is no transporter available offering such an appropriate route the TSP has to make up the route for the passenger from for example three routes A, B and C as shown in Fig. 2. Routes A, B and C are routes or parts of routes offered to the TSP 1 by different transporters A, B and C. An example of the complete route B of transporter B is shown in the right part of Fig. 2 wherein said route B is going from a place B' to a place B''. Only that part of the complete route B which is marked with a thick line indicates that part of route B where the passenger is being transported by transporter B. At the nodes indicating the start and the end of the thick line which is referred to as matched common route MCR the passenger has to change the vehicle. The MCR is calculated automatically by the TSP with regard to available transporter routes and passenger's transportation requests. In the example of Fig. 2 routes A and C have to be served by other transporters, more specifically, by transporters A and C.

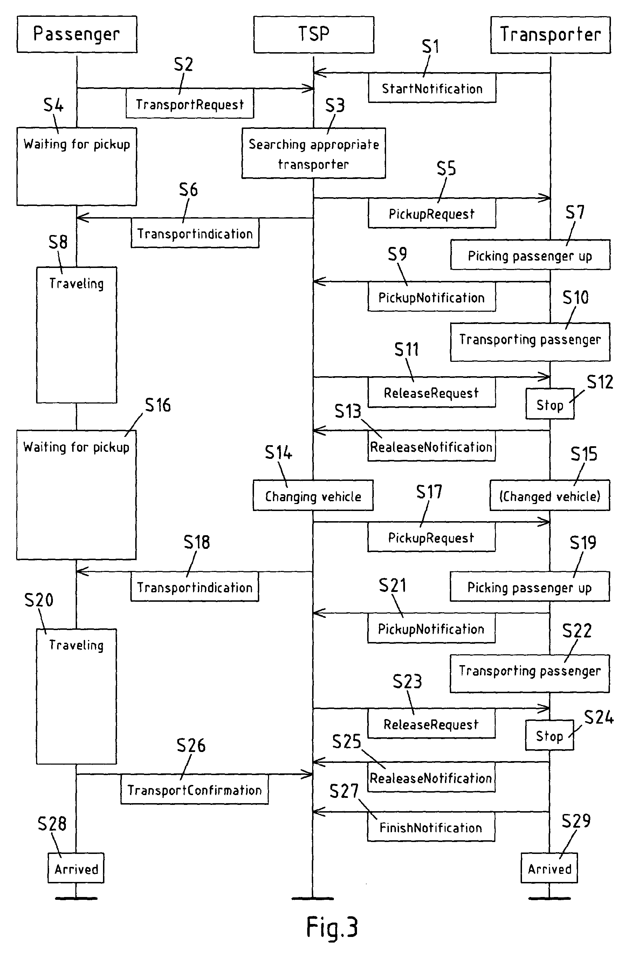

The operation of the system shown in Fig. 1 will now be described by referring to Fig. 3.

The system only works if there is at least one driver or transporter communicating a notification to the TSP wherein the notification indicates that the driver/transporter is willing to pick up a passenger in the transporter and to transport the passenger on at least a part of the transporter route as illustrated by referring to Fig. 2. That information is preferably stored in the transporter database 10 if the transporter is going on a specific route very often. Preferably, the driver/transporter further provides a specific start notification according to method step S1 to the TSP 1 notifying that the transporter has actually started his route. Upon such a start notification is received by the TSP 1 the transporter might be tracked by a global positioning system GPS or a global system for mobile communication/universal mobile communications system GSM/UMTS providing positioning information about the current position of the transporter via a network terminal at the transporter's location to the TSP. The current position of the driver might also be stored as transporter position/data in the driver database 10.

On the other hand there must be a transport request according to method step S2 in Fig. 3 communicated from the passenger via his network terminal to the TSP 1. In said transport request the passenger requests a driver for being picked up at a starting point (passenger position data), preferably at his current position and to be transported to a final destination. Said transport request may include the current position node of the passenger. When the passenger has communicated the transport request to the TSP 1 he has to wait for being picked up as shown in method step S4.

Upon receipt of said transport request the TSP 1 starts searching an appropriate transporter for the passenger, see method step S3. Said searching is facilitated when the current position of each transporter is tracked upon their start notification have been received by the TSP 1. However, the searching, that means the selection of the best suitable transporter for the passenger includes the step of evaluating the available transporter routes with respect to the transportation request of the passenger.

Upon the best available transporter has been selected a pick-up request is communicated to said selected transporter via the transporter network terminal as shown in method step S5. The pick-up request is a message communicated from the TSP 1 to the selected transporter instructing him/it to a specified node of said served route network area in order to pick up a passenger there and to transport the passenger either to the final destination or to another node of the transporter's route.

Subsequently, according to method step S6 a transport indication is communicated from the TSP 1 to the passenger. Said transport indication indicates to the passenger that he will be picked-up at his current node position, preferably within a short time. The pick-up time might be indicated precisely. Moreover, said transport indication may include the identification of the selected transporter.

According to method step S7 the passenger is picked-up by the transporter and travels together with him along the matched common route MCR according to method steps S8 and S10. The pick-up of the passenger might be notified to the TSP 1 according to method step S9. Said pick-up notification may include the current position of the transporter and the transporter identification.

A short time before the vehicle reaches either the final destination desired by the passenger or an intermediate node on the transporter route which is not yet the final destination requested by the passenger the transporter may receive a release request from the TSP 1 requesting the driver/transporter to release the passenger at either the desired destination or at an intermediate node. Said release request according to method step S11 usually includes the place, in particular the node where the passenger shall be released. Upon reaching that place or node the transporter stops according to method step S12 and releases the passenger. Afterwards the driver/transporter sends a pick-up notification to the TSP informing the TSP 1 that the release has taken place.

Preferably, that release notification according to method step 13 includes information about the node of the served road network area, where the release of the passenger has actually taken place and about the transporter identification. If the passenger has been released from the vehicle at his desired final destination the messaging scenario as described above has come to an end.

However, if the passenger has been released from the vehicle at a place or node which does not coincide with the passenger's desired final destination the messaging scenario continues as follows.

Assuming that the TSP 1 has known before - that means when mapping the travelling route for the passenger according to his transportation request - that the place or node where the passenger has been released from a first transporter is not his final desired destination the TSP 1 will in advance have organised and searched for another transporter suitable for picking-up the passenger at the place where he has been released from the first transporter. Alternatively, the TSP 1 starts searching such a suitable vehicle just upon it has been informed by the release notification that the passenger has been released from the first transporter at a place which is not identical to his desired final destination.
Upon such a new suitable transporter has been found the passenger is picked-up by said new transporter and transported by it to its final destination or to a node closer thereto. The method steps which are carried out for enabling the transport of the passenger in the new transporter are method steps S16 to S25. These method steps correspond to method steps S4 to S13 which have been described above.

Now assuming that the passenger has been released from the new transporter at his final destination in method step S24 the passenger communicates a transport confirmation to the TSP 1 according to method step 26. Said transport confirmation confirms to the TSP 1 that the passenger has reached his final destination. Said confirmation is preferably communicated to the TSP 1 after the TSP 1 has received the release notification according to method step S25. The transport confirmation can either be sent autonomously by the passenger as shown in Fig. 3 or can for the passenger's convenience be requested by the TSP 1 before being sent. Said transport confirmation preferably includes the passenger's identification.

If the transporter has finished his route, that means he has reached the end B" of his route which may be identical to the passenger's desired destination or not (see Fig. 2 right half), the transporter preferably provides a finish notification to the TSP 1 according to method step S27. Said notification indicates that the transporter has finished his route. The notification can either be sent autonomously by the driver or the transporter as shown in Fig. 3 or can be requested by the TSP 1 before being sent for the driver's convenience. Said finish notification preferably includes the transporter's identification.

Method steps 28 and 29 according to Fig. 3 indicate that both, the passenger and the driver have finally arrived their individual desired destinations.

From the messaging scenario shown in Fig. 3 it has become apparent that the transporter is considered according to the present invention to be in one of three statuses upon he has issued a start notification and is tracked by a positioning system. In a first status the transporter travels empty, that means without transporting any passenger; in a second status it transports a passenger and in a third status it has arrived his final destination and is thus not available anymore for transport of passengers.

Correspondingly, there are three different statuses of the passenger. In a first status the passenger is waiting for being picked-up preferably at his current position; in a second status the passenger is being transported by the transporter and in a third status the passenger has arrived his desired destination and thus, needs no further transportation.

All these different statuses of the passenger or the driver are communicated to the TSP as illustrated in the messaging scenario according to Fig. 3 with the help of the network terminals of the passenger or the driver/transporter. These network terminals preferably provide global positioning system JPS or global system for mobile communication GSM/Universal mobile telecommunications system UMTS location positioning capabilities to locate the passengers or drivers/transporters and they provide low bit rate data service towards the TSP 1 to exchange the messages according to Fig. 3. The network terminals for the drivers/transporters preferably further comprise a car navigation system for supporting the driver to find the place where he shall pick-up the passenger or to find his route.

The passenger might use a mobile communication device, e.g. a mobile phone, for connecting to the TSP and also the transporter network terminal might be a mobile phone which is installed fixed or realisably within the transporter. The network terminals are preferably compliant with the Wireless Application Protocol WAP standard.

The whole service might be based on the WAP technology. The WAP protocol can be used as a communication protocol between the network terminals and WAP can be used to implement the service at the service provider side.

## Claims

1. Passenger transportation system for transporting a passenger from a starting point (P1) along a passenger route to a destination (P2) by at least one transporter using a transporter route (B'-B'') which overlaps at least partially with the passenger route; the system comprising:
a transport service provider TSP unit (1) comprising transporter route information and served network area information and being enabled for communicating passenger position data and transporter identification data with the passenger and transporter position data as well as pick-up and release notification data with the transporter;
such that the passenger route is composed of at least one section of a selected overlapping transporter route.

2. The system according to claim 1, **characterized in that** the TSP (1) comprises
a first network terminal (50-1 ...50-N) at a passenger's location for exchanging said passenger position data and said transporter identification with said TSP (1); and
at least a second network terminal (40-1...40-N) at the location of the at least one transporter for exchanging said transporter position data and said pick-up/release notification data with said TSP (1).

3. The system according to claim 2, **characterized in that** the first and/or second network terminal (40-1...-40N, 50-1...50-N) provides GPS or GSM/UMTS location positioning capabilities for tracking the location of the passenger and/or the at least one transporter for generating said passenger and/or transporter position data.

4. The system according to claim 3, **characterized in that** the first and/or second network terminals (40-1...40-N, 50-1...50-N) each of which being capable of communicating the location position data of the passenger and/or the transporter to the TSP (1).

5. The system according to claim 1, **characterized in that** the TSP (1) is connected with a transporter database (10) containing said individual transporter route information of all transporters and/or their usual travel times.

6. The system according to claim 1, **characterized in that** the TSP (1) is connected with a NCD database (25) for storing all nodes and all connections of the served road network area.

7. The system according to claim 1, **characterized in that** the TSP (1) is connected with a passenger database (5) containing information about the passenger identification, the preferred starting point, the desired destination, the usual travel times and/or the passenger's current position.

8. The system according to claim 1, **characterized in that** the TSP (1) comprises a register interface (15) enabling passengers or driver's of the transporters to register before using the passenger transportation system.

9. The system according to claim 8, **characterized in that** the TSP (1) comprises a mailing interface (55) enabling communication between the TSP (1) and any registered user of the system.

10. The system according to claim 1, **characterized in that** the TSP (1) comprises an accounter for calculating the costs of the passenger for being transported.

11. Network terminal unit (40-1...-40N, 50-1...50-N) of a mobile communications system MTS being capable for use in a system according to claim 1.

12. Method for transporting a passenger from a starting point (P1) along a passenger route to a destination (P2) by at least one transporter using a transporter route which at least overlaps partially with the passenger route, the method comprising the steps of:
storing information data about the transporter route of at least one transporter and information about a served road network area in a central transport service provider TSP (1);
communicating passenger position data and transporter identification data between the passenger and said TSP (1); and
communicating transporter position data and pickup/release notification data between the transporter and said TSP (1);
such that the passenger's route is composed of at least one section of a selected overlapping transporter route.

13. Method according to claim 12, **characterized in that** the passenger is successively transported along at least two sections of the passenger route by repeating the method according to claim 12 until the passenger has reached his desired destination (P2).

14. The method according to claim 12, **characterized in that** each of said transporter routes represents a combination of connections of the served road network area.

15. The method according to claim 14, **characterized in that** the starting point (P1) and the destination (P2) of the passenger route are nodes of said served road network area.

16. The method according to claim 13, **characterized in that** the steps of communicating data between the passenger and the TSP (1) or the transporter and the TSP (1) include a proposal of an appropriate meeting point and of an appropriate dating time for the passenger and/or the transporter for the next step of the route.

17. The method according to claim 16, **characterized in that** the appropriate meeting point is a selected node of the served road network area.

18. The method according to claim 1, **characterized in that** the starting point (P1) is the current position of the passenger.

19. The method according to claim 1, **characterized in that** the transporter communicates to the TSP (1) a start notification indicating that he has actually started his route.

20. The method according to claim 19, **characterized in that** the selection of the transporter to be used by the passenger comprises the step of evaluating said position data of the transporters who have communicated said start notification to the TSP (1) in the view of the transportation request of the passenger.

21. The method according to claim 1, **characterized in that** it comprises the step of tracking the passenger, when he is transported in the transporter.

22. The method according to claim 21, **characterized in that** the method comprising the step of tracking the distance along which the passenger has been transported in the transporter.

23. The method according to claim 12, **characterized in that** the communication between the passenger's network terminal (40-1...-40N) and the TSP (1) or between the transporter's networkterminal (50-1...50-N) and the TSP (1) is a mobile communication based on the WAP standard.

24. The method according to 23, **characterized in that** registration of the transporter or of the passenger to the TSP (1) is done according to said mobile communication.
